# EUROPÄISCHE PATENTSCHRIFT

(11) **EP 1 071 019 B1**
(45) Veröffentlichungstag und Bekanntmachung des Hinweises auf die Patenterteilung: **29.03.2006**
(21) Anmeldenummer: 00114703.2
(22) Anmeldetag: 08.07.2000
(51) Int. Cl.: G06F 13/00, G05B 19/00

(54) **Verfahren und Anordnung zur Datenübertragung zwischen verschiedenen Speichereinheiten von Positionsmesseinrichtungen**
Method and apparatus for data transmission between different memory units of position measuring devices
Procédé et appareil de transfert de données entre diverses unités de mémoire de dispositifs de mesure de position.

(30) Priorität: 20.07.1999 DE 19933963
(43) Veröffentlichungstag der Anmeldung: 24.01.2001
(73) Patentinhaber: Dr. Johannes Heidenhain GmbH, 83292 Traunreut (DE)
(72) Erfinder: Strasser, Erich, Dipl.-Ing. (FH), 83308 Trostberg (DE); Mittmann, Rudi, Dipl.-Ing. (FH), 83342 Tacherting (DE)

(56) Entgegenhaltungen:
- EP-A- 0 660 209
- DE-A- 3 318 977
- DE-A- 3 904 917
- DE-A- 19 529 213
- US-A- 3 020 457

## Beschreibung

Die vorliegende Erfindung betrifft ein Verfahren sowie eine Anordnung zur Datenübertragung zwischen verschiedenen Speichereinheiten von Positionsmeßeinrichtungen.

In einer von der Anmelderin vertriebenen linearen Positionsmeßeinrichtung, die auf einem optischen Abtastprinzip basiert, ist innerhalb der Abtasteinheit neben verschiedensten Bauelementen, die zur Erzeugung der Abtastsignale dienen, auch eine Speichereinheit in Form eines EEPROMs angeordnet. In der Speichereinheit sind üblicherweise eine Reihe von spezifischen Daten der jeweiligen Positionsmeßeinrichtung abgespeichert. Diese Daten werden entweder vom jeweiligen Anwender oder aber vom Hersteller der Positionsmeßeinrichtung in die Speichereinheit geschrieben. Hierzu gehören etwa Daten bzgl. der Nullpunkteinstellung, Taktanzahl, Maßstababschnitt etc.. Fällt eine derartige Abtasteinheit nunmehr aus irgendeinem Grund aus, so müssen die zum Betrieb erforderlichen spezifischen Daten neu in die Speichereinheit der jeweiligen Austausch-Abtasteinheit eingeschrieben werden. Im Fall einer großen Anzahl derartiger abgespeicherter Daten bzw. meßsystem-spezifischer Informationen bedeutet dies einen enormen Aufwand. Zudem resultieren mitunter Schwierigkeiten bei der Rekonstruktion der urspünglichen Daten.

Selbstverständlich ergibt sich das gleiche Problem, wenn die jeweiligen Speichereinheiten nicht in der Abtasteinheit, sondern anderweitig in der jeweiligen Positionsmeßeinrichtung angeordnet sind. Dies ist beispielsweise bei rotatorischen Positionsmeßeinrichtungen der Fall.

Aufgabe der vorliegenden Erfindung ist es daher, ein möglichst einfaches und fehlersicheres Verfahren bzw. eine entsprechende Anordnung anzugeben, die es im Fall des erforderlichen Austausches einer derartigen Speichereinheit einer Positionsmeßeinrichtung ermöglicht, die Daten aus der auszutauschenden Speichereinheit in die neue Speichereinheit zu übernehmen.

Diese Aufgabe wird gelöst durch ein Verfahren mit den Merkmalen des Anspruches 1.

Vorteilhafte Ausführungsformen des erfindungsgemäßen Verfahrens ergeben sich aus den Maßnahmen, die in den von Anspruch 1 abhängigen Patentansprüchen aufgeführt sind.

Zur Lösung der vorliegenden Aufgabe dient ferner eine Anordnung mit den Merkmalen des Anspruches 10.

Vorteilhafte Ausführungsformen der erfindungsgemäßen Anordnung ergeben sich aus den Maßnahmen, die in den von Anspruch 10 abhängigen Patentansprüchen aufgeführt sind.

Erfindungsgemäß wird nunmehr eine automatische Übertragung bzw. ein automatisches Kopieren der Daten der ersten, auszutauschenden Speichereinheit in die neue, zweite Speichereinheit vorgesehen. Dies ist insbesondere dann problemlos möglich, wenn der Austausch der Speichereinheiten nicht durch Defekte an der ersten Speichereinheit verursacht wurde; so kann beispielsweise ein Austausch aufgrund anderweitiger Probleme mit einer Abtasteinheit erforderlich sein, wenn die Speichereinheit in der Abtasteinheit angeordnet ist.

Auf diese Art und Weise ist es insbesondere in einfacher Art und Weise möglich, die anwender-spezifischen Daten aus der auszutauschenden, ersten Speichereinheit in die neue, zweite Speichereinheit zu übernehmen. Eine Rekonstruktion derartiger Daten durch den Service des Meßsystem-Herstellers ist grundsätzlich nicht ähnlich einfach möglich wie die Rekonstruktion derjenigen Daten, die durch den Meßsystem-Hersteller in die Speichereinheit geschrieben wurden.

Über das erfindungsgemäße Verfahren bzw. die erfindungsgemäße Anordnung ist zudem sichergestellt, daß für den Anwender erkennbar ist, ob die Datenübertragung korrekt verlaufen ist oder ob ggf. Probleme resultierten. In einer besonders vorteilhaften Ausführungsform ist dabei sogar eine Identifikation der Fehlerursache im Fall der nicht-korrekten Datenübertragung möglich. Die Fehlererkennung bzw. Fehleridentifikation kann dabei auf verschiedenste Art und Weise erfolgen.

Als weiterer Vorteil ist anzuführen, daß auch im Fall einer eventuell defekten Signalverarbeitungseinheit bzw. Prozessors auf Seiten einer auszutauschenden Abtasteinheit eine automatisierte Übertragung der Daten in die neue Speichereinheit möglich ist.

Zudem ist sichergestellt, daß sich die Stromaufnahme der Positionsmeßeinrichtung aufgrund der erfindungsgemäßen Maßnahmen nicht wesentlich vergrößert; dies ist insofern von Bedeutung, als die der jeweiligen Positionsmeßeinrichtung nachgeordnete Auswerteeinheit in der Regel nur auf die Versorgung einer einzigen Abtasteinheit ausgelegt ist.

Selbstverständlich ist die vorliegende Erfindung nicht auf ein bestimmtes Abtastprinzip zur Erzeugung positionsabhängiger Signale in der jeweiligen Positionsmeßeinrichtung beschränkt, sondern kann sowohl in optischen, magnetischen, kapazitiven oder induktiven Positionsmeßeinrichtungen eingesetzt werden. Darüberhinaus kann die vorliegende Erfindung auch in Verbindung mit Positionsmeßeinrichtungen eingesetzt werden, in denen die Speichereinheiten nicht auf Seiten der Abtasteinheit angeordnet sind.

Weitere Vorteile sowie Einzelheiten der vorliegenden Erfindung ergeben sich aus der nachfolgenden Beschreibung eines Ausführungsbeispieles anhand der beiliegenden Zeichnungen.

Dabei zeigt
- Figur 1: eine schematische Prinzipskizze einer Positionsmeßeinrichtung;
- Figur 2: eine schematische Darstellung einer ersten und zweiten Abtasteinheit, die gegeneinander ausgetauscht werden;
- Figur 3: die detaillierten Schaltungsanordnungen zweier Abtasteinheiten während der Datenübertragung;
- Figur 4: ein Flußdiagramm zur Erläuterung eines Ausführungsbeispieles des erfindungsgemäßen Verfahrens.

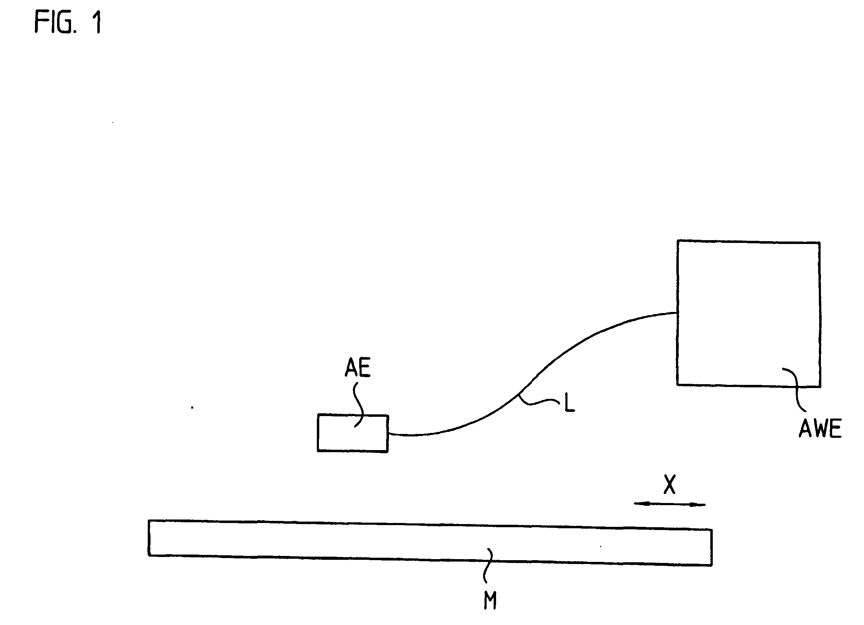

Eine schematische Prinzipskizze einer Positionsmeßeinrichtung ist in Figur 1 dargestellt. Die Positionsmeßeinrichtung umfaßt hierbei einen Maßstab M, demgegenüber eine Abtasteinheit AE in Meßrichtung x beweglich angeordnet ist. Durch Abtasten einer auf dem Maßstab M angeordneten Meßteilung werden in der Abtasteinheit AE positionsabhängige Abtastsignale erzeugt, die über eine Leitung L an eine nachgeordnete Auswerteeinheit AWE zur Weiterverarbeitung übertragen werden. Weitere Details zur jeweiligen Abtastung seien hier nicht erläutert, da diese nicht erfindungswesentlich sind.

Die vorliegende Erfindung ist selbstverständlich unabhängig von der Art der erzeugten positionsabhängigen Abtastsignale. Beispielsweise kann vorgesehen sein mit Hilfe der Positionsmeßeinrichtung lediglich inkrementale Positionssignale zu erzeugen, lediglich absolute Positionssignale, Kombinationen hiervon usw..

Ebensowenig ist die vorliegende Erfindung auf den Einsatz in linearen Meßanordnungen beschränkt, d.h. es ist auch möglich, dieselbe in rotatorischen Meßanordnungen einzusetzen.

Vorzugsweise wird die dargestellte Positionsmeßeinrichtung in Verbindung mit einer numerisch gesteuerten Werkzeugmaschine verwendet, um damit z.B. die Relativposition von Werkzeug und Werkstück zu bestimmen.

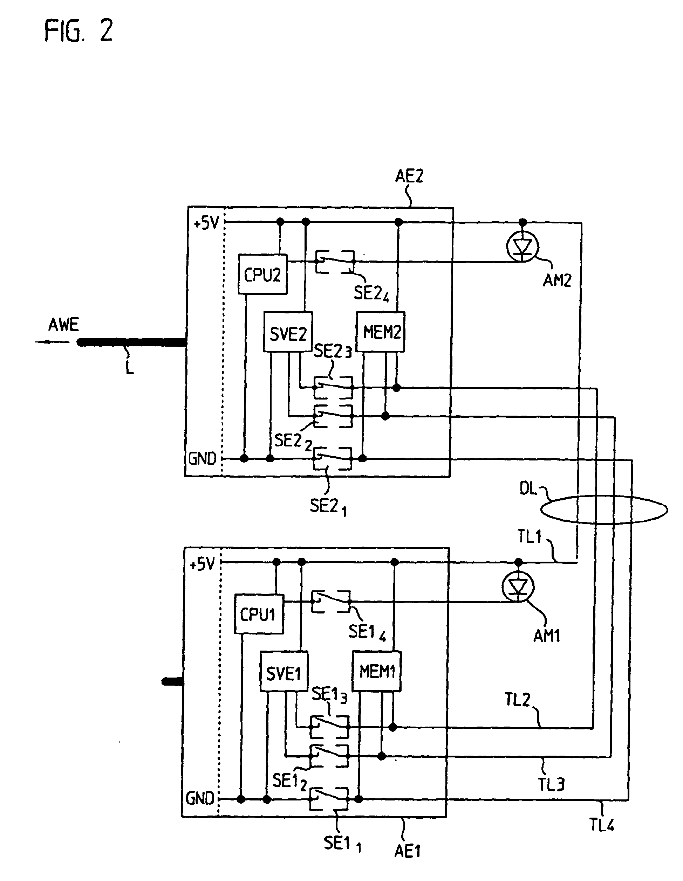

Die vorliegende Erfindung soll nunmehr anhand eines Ausführungsbeispieles näher erläutert werden, welches in den Figuren 2 - 4 dargestellt ist. Insbesondere soll hierbei erläutert werden, wie im Fall eines eventuell erforderlichen Austauschs der Abtasteinheit einer Positionsmeßeinrichtung vorgegangen wird. Die Speichereinheiten mit den spezifischen Daten der Positionsmeßeinrichtungen sind in diesem Ausführungsbeispiel demzufolge in den Abtasteinheiten angeordnet. Die Anordnung der Speichereinheit in der Abtasteinheit ist jedoch nicht erfindungswesentlich; die Speichereinheit kann beispielsweise in einer rotatorischen Positionsmeßeinrichtung auch anderweitig im Gehäuse, auf einer Platine etc. angeordnet sein.

Figur 2 zeigt in schematischer Form die beiden Abtasteinheiten AE1 und AE2 einer Positionsmeßeinrichtung, wobei die erste Abtasteinheit AE1 aufgrund eines Defektes gegen die zweite Abtasteinheit AE2 ausgetauscht werden soll. Lediglich die neue Abtasteinheit AE2 ist beim Austausch über die Leitung L mit der nachgeordneten - in Fig. 2 nicht gezeigten - Auswerteeinheit verbunden und wird u.a. über die Leitung L auch mit Strom versorgt; die auszutauschende Abtasteinheit AE1 hingegen ist ausgangsseitig bereits nicht mehr mit der Auswerteeinheit verbunden. Über eine schematisch angedeutete Datenübertragungsleitung DL sind die beiden Abtasteinheiten AE1 und AE2 miteinander verbunden, wozu auf Seiten der beiden Abtasteinheiten AE1, AE2 geeignete lösbare elektrische Verbindungen vorgesehen sind. Hierbei kann es sich z.B. um geeignete Steckverbindungen oder dgl. handeln. Die Datenübertragungsleitung DL wiederum besteht in diesem Ausführungsbeispiel aus insgesamt vier Teilleitungen TL1 - TL4, die zur Übertragung verschiedenster Informationen bzw. zur partiellen Strom-Versorgung der auszutauschenden Abtasteinheit AE1 dienen. Die Teilleitung TL3 wird hierbei zur Übertragung von Daten genutzt, über die Teilleitung TL2 wird in einer möglichen Ausführungsform ein Taktsignal zur Synchronisation der Datenübertragung übermittelt; die Teilleitung TL4 verbindet die beiden Masse-Anschlüsse der Abtasteinheiten AE1, AE2 miteinander, während über die Teilleitung TL1, die beiden auf +5V liegenden Anschlüsse der Abtasteinheiten AE1, AE2 miteinander verbunden werden. In die Teilleitung TL1 sind im dargestellten Ausführungsbeispiel ferner visuelle Anzeigemittel AM1, AM2 in Form zweier LEDs integriert. Auf die Funktion der Anzeigemittel AM1, AM2 wird nachfolgend im Zusammenhang mit der detaillierten Beschreibung des erfindungsgemäßen Verfahrens noch näher eingegangen.

Anstelle der in dieser Variante genutzten Datenübertragunsgleitung DL aus mehreren Teilleitungen TL1 - TL4 sind im Rahmen der vorliegenden Erfindung selbstverständlich auch alternative Datenübertragungsmöglichkeiten zwischen den beiden Abtasteinheiten AE1, AE2, respektive Speichereinheiten einsetzbar. Beispielsweise können an dieser Stelle auch geeignete drahtlose Datenübertragungsmöglichkeiten zum Einsatz kommen usw..

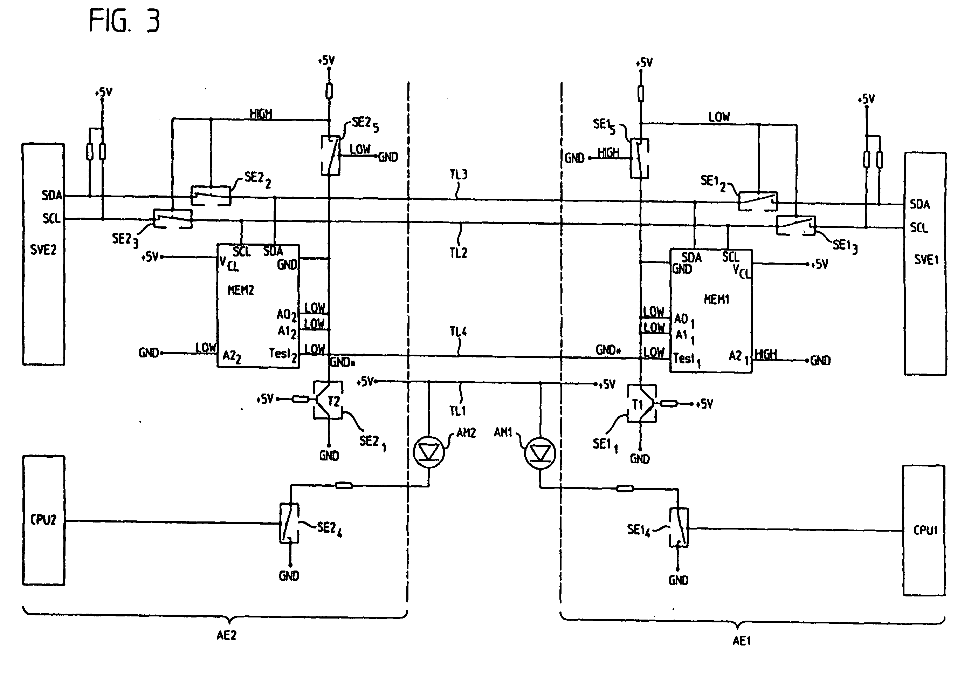

Die beiden Abtasteinheiten AE1 sind jeweils vollkommen identisch aufgebaut; die wichtigsten Komponenten dieser beiden Baugruppen seien nachfolgend kurz erläutert. Nicht gezeigt sind in den Figuren 2 und 3 dabei aus Gründen der besseren Übersichtlichkeit diejenigen Elemente der Abtasteinheiten AE1, AE2, die zur Erzeugung der positionsabhängigen Abtastsignale dienen. Im Fall optischer bzw. photoelektrischer Positionsmeßeinrichtungen handelt es sich hierbei beispielsweise um eine Lichtquelle, ein oder mehrere Abtastteilungen sowie ein oder mehrere optoelektronische Detektorelemente etc..

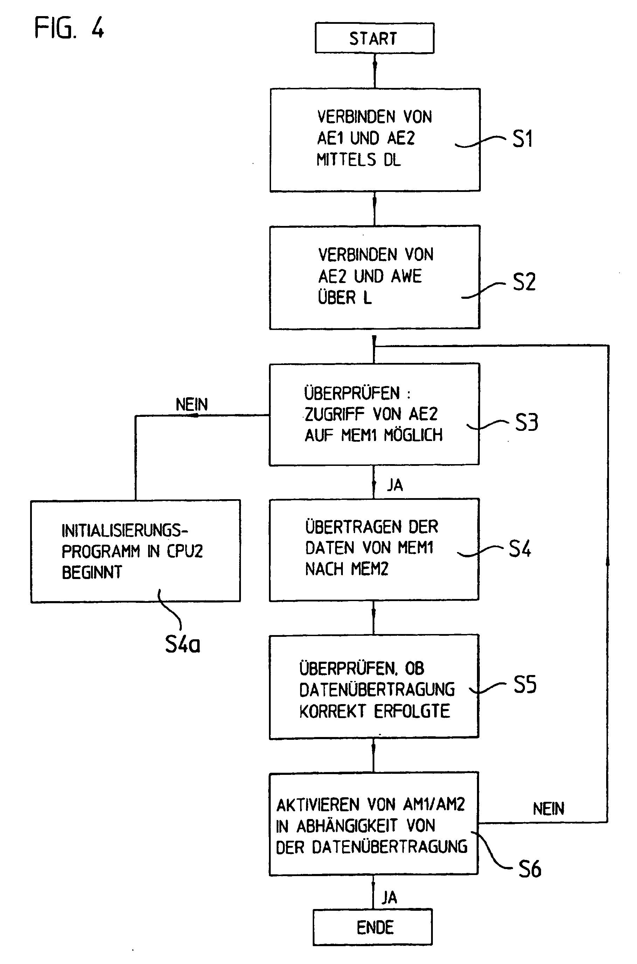

Jede der beiden Abtasteinheiten AE1, AE2 umfaßt im gezeigten Ausführungsbeispiel eine Prozessoreinheit CPU1, CPU2, eine Signalverarbeitungseinheit SVE1, SVE2, eine Speichereinheit MEM1, MEM2 sowie mehrere Schaltelemente SE1₁, SE1₂, SE1₃, SE1₄, SE2₁, SE2₂, SE2₃, SE2₄; von den Schaltelementen der Abtasteinheiten sind in Figur 2 dabei aus Gründen der besseren Übersichtlichkeit nicht alle dargestellt.
Die Prozessoreinheiten CPU1, CPU2 dienen dabei jeweils u.a. zur Synchronisation bzw. Steuerung der Signalverarbeitungsabläufe in den beiden Abtasteinheiten AE1, AE2. In den Signalverarbeitungseinheiten SVE1, SVE2 werden die jeweils detektierten Abtastsignale verarbeitetet und zur Signalübertragung an die Auswerteeinheit geeignet aufbereitet. In den beschreib- und auslesbaren Speichereinheiten MEM1, MEM2 wiederum werden verschiedenste spezifische Daten der jeweiligen Positionsmeßeinrichtung abgespeichert, die zum Betrieb der Positionsmeßeinrichtung erforderlich sind. Die Speichereinheiten MEM1, MEM2 sind beispielsweise als EEPROMS ausgebildet. Bei den erwähnten Daten kann es sich etwa um Daten bzgl. des mit der jeweiligen Abtasteinheit AE1, AE2 abzutastenden Meßteilungsabschnittes einer absoluten Positionsmeßeinrichtung handeln, desweiteren können maschinenspezifische Daten ebenso darin abgelegt werden, wie etwa Angaben zur Taktanzahl, Nullpunkteinstellung uvm.. Im Zusammenhang mit dem bislang erläuterten Aufbau der Abtasteinheiten und den eingesetzten Speichereinheiten sei im übrigen ergänzend auf die EP 0 660 209 B1 der Anmelderin verwiesen. Die Funktion und Bedeutung der verschiedenen Schaltelemente SE1₁, SE1₂, SE1₃, SE1₄, SE2₁, SE2₂, SE2₃, SE2₄ wird im Verlauf der nachfolgenden Beschreibung des erfindungsgemäßen Verfahrens bzw. der erfindungsgemäßen Anordnung anhand von Figur 4 und Figur 3 noch detaillierter erläutert.

Erfindungsgemäß werden nunmehr anstelle der kompletten, zeitaufwendigen Neueingabe der verschiedenen Daten in die neue bzw. zweite Speichereinheit MEM2 über eine weitgehend automatisierte Datenübertragung die in der alten bzw. ersten Speichereinheit MEM1 abgelegten Daten in die zweite Speichereinheit MEM2 übertragen, respektive kopiert. Das relativ aufwendige manuelle Eingeben und Rekonstruieren dieser Daten aus der ersten Speichereinheit MEM1 entfällt somit.

Ein mögliches Ausführungsbeispiel des erfindungsgemäßen Verfahrens sei anhand des Flußdiagrammes in Figur 4 nachfolgend erläutert. In einem ersten Verfahrensschritt S1 werden die beiden Abtasteinheiten AE1 und AE2 über eine Datenübertragungsleitung DL miteinander verbunden. Im folgenden Schritt S2 wird die neue bzw. zweite Abtasteinheit AE1 über die Leitung L mit der Auswerteeinheit verbunden. Im Schritt S3 wird anschließend über die Prozessoreinheit CPU2 der neuen Abtasteinheit AE2 überprüft, ob überhaupt ein Zugriff auf die Speichereinheit MEM1 der ersten Abtasteinheit AE1 möglich ist bzw. ob die beiden Abtasteinheiten AE1 und AE2 überhaupt korrekt miteinander verbunden sind. Ist dies nicht der Fall, so beginnt gemäß Schritt S4a ein Initialisierungsprogramm in der Prozessoreinheit CPU2, um dieselbe in einen funktionsfähigen Betriebszustand zu versetzen. Ist hingegen ein Zugriff auf die erste Speichereinheit MEM 1 möglich, so wird gemäß dem Verfahrensschritt S4 zumindest ein Teil der Daten von der ersten Speichereinheit MEM1 in die zweite Speichereinheit MEM2 übertragen, so daß nach der erfolgten Datenübertragung in der zweiten Speichereinheit MEM2 zumindest teilweise die spezifischen Daten der ersten Speichereinheit MEM1 enthalten sind. Wenn die Datenübertragung bzw. der Kopiervorgang abgeschlossen ist wird anschließend mit Hilfe der zweiten Prozessoreinheit CPU2 im Schritt S5 überprüft, ob die Datenübertragung korrekt erfolgte. Dies kann beispielsweise durch Überprüfen von bestimmten Teilen des Übertragungsprotokolles erfolgen. In Abhängigkeit von dieser Überprüfung wird daraufhin im Schritt S6 ein Anzeigemittel AM1, AM2 aktiviert, um anzuzeigen, ob der Kopiervorgang korrekt verlief. Die Aktivierung der Anzeigemittel AM1, AM2 erfolgt hierbei über die Prozessoreinheit CPU2, die zu diesem Zweck mindestens das Schaltelement SE2₄ geeignet ansteuert. Als Anzeigemittel AM1, AM2 dienen im dargestellten Ausführungsbeispiel die in die Datenübertragungsleitung DL integrierten visuellen Anzeigemittel AM1, AM2, die als LEDs ausgebildet sind. Dabei wird z.B. durch dauernden Leuchtbetrieb der LEDs angezeigt, daß die Datenübertragung korrekt verlaufen ist. Demgegenüber zeigt ein Blinkmodus der LEDs an, daß die Datenübertragung fehlerhaft war. Hierbei ist es desweiteren möglich, durch unterschiedliche Blinkmodi auch die jeweilige Art des Fehlers bei der Datenübertragung anzuzeigen bzw. zu codieren. Beispielsweise könne ein zweimaliges Blinken und eine nachfolgende Pause anzeigen, daß ein Lesefehler vorliegt; ein dreimaliges Blinken und eine nachfolgende Pause zeigenhingegen an, daB ein Schreibfehler vorliegt usw.

Selbstverständlich ist es derart möglich, die verschiedensten Fehlerarten zu codieren und die Anzeigemittel entsprechend zu aktivieren. Darüberhinaus stellt die erläuterte Variante mit den LEDs als visuelle Anzeigemittel AM1, AM2 lediglich eine mögliche Ausführungsform geeigneter Anzeigemittel dar. Daneben wäre es beispielsweise möglich eine Anzeige auf einem geeigneten Display, geeignete akustische Anzeigemittel usw. vorzusehen,

Im Zusammenhang mit den Anzeigemitteln AM1, AM2 sei an dieser Stelle darauf hingewiesen, daß grundsätzlich ein einziges visuelles Anzeigemittel ausreichend wäre; um bei der Verwendung von LEDs jedoch sicherzustellen, daß die Datenübertragungsleitung DL richtungsunabhängig mit den beiden Abtasteinheiten AE1, AE2 verbunden werden kann, wurden in diesem Ausführungsbeispiel zwei LEDs als visuelle Anzeigemittel AE1, AE2 vorgesehen.

Wird derart festgestellt, daß die Datenübertragung korrekt bzw. erfolgreich verlief, so ist die Datenübertragung ist beendet. Wenn dagegen über die Anzeigemittel AM1, AM2 ein Fehler angezeigt wird, so kann der jeweilige Anwender das erfindungsgemäße Verfahren noch einmal oder ggf. noch mehrere Male durchführen, bis eine korrekte Datenübertragung vorliegt.

Auf diese Art und Weise ist demzufolge eine komfortable Übertragung der Daten aus der ersten Speichereinheit MEM1 der auszutauschenden Abtasteinheit AE1 in die Speichereinheit MEM2 der neuen Abtasteinheit AE2 gewährleistet.

Weitere schaltungstechnische Details einer Ausführungsform der erfindungsgemäßen Vorrichtung seien nachfolgend anhand von Figur 3 erläutert. In Figur 3 sind hierbei die detaillierten Schaltungsanordnungen der beiden Abtasteinheiten AE1 und AE2 während der erfolgenden Datenübertragung dargestellt.

Wie vorab erläutert ist die zweite Abtasteinheit AE2 mit der nachgeordneten - nicht dargestellten - Auswerteeinheit verbunden; im Zusammenhang mit der vorliegenden Erfindung ist dabei lediglich die Strom-Versorgung der neuen, zweiten Abtasteinheit AE2 über die beiden Leitungen +5V, GND von Bedeutung.

Auf Seiten der zweiten Abtasteinheit AE2 ist zur Datenübertragung der Transistor T2 leitend geschaltet. Dessen Basis liegt hierbei über einen Widerstand auf +5V; der Emitter auf GND. Die Leitung GND* ist bis auf 0.1V identisch mit GND. Am Steuereingang des - in Figur 2 nicht gezeigten - Schaltelementes SE2₅ liegt ein logischer LOW-Pegel, was bewirkt, daß das Schaltelement SE2₅ offen bleibt. Die beiden weiteren Schaltelemente SE2₂ und SE2₃ bleiben daher geschlossen. Die Adressleitungen A0₂, A1₂, TEST₂ sowie A2₂ der Speichereinheit MEM2 liegen jeweils auf logischem LOW-Pegel. Über die erläuterte Beschaltung wird somit u.a. auch eine ausreichende Stromversorgung der Speichereinheit MEM2 sichergestellt.

Die auszutauschende Abtasteinheit AE1 ist über die Teilleitungen TL1-TL4 der Datenübertragungsleitung DL mit der Abtasteinheit AE2 verbunden. Über die dargestellte Verbindungsvariante ist sichergestellt, daß die Abtasteinheit AE1 nicht an GND angeschlossen ist sondern lediglich an GND*. Aufgrund der gewählten Bauteil-Bestückung liegt zwischen +5V und GND ein Widerstand von ca. 300Ω, wodurch wiederum alle GND-Anschlüsse ein Potential von nahezu +5V aufweisen. Dies wiederum bewirkt, daß das als Transistor T1 ausgebildete Schaltelement SE1₁ in der ersten Abtasteinheit AE1 sperrt. Am Steuereingang des Schaltelementes SE1₅ liegt demzufolge ein logischer HIGH-Pegel an, so daß das Schaltelement SE1₅ geschlossen ist. Dadurch wiederum wird ein Öffnen der Schaltelemente SE1₂ und SE1₃ bewirkt, wodurch die Speichereinheit MEM1 der ersten Abtasteinheit AE1 von der Signalverarbeitungseinheit SVE1 getrennt wird. Auch bei defekter Signalverarbeitungseinheit SVE1 ist derart sichergestellt, daß die Speichereinheit MEM1 ausgelesen werden kann. Lediglich die Speichereinheit MEM1 sowie die Schaltelemente SE1₁ - SE1₅ werden während der Datenübertragung auf Seiten der ersten Abtasteinheit AE1 über GND* und +5V auf den Teilleitungen TL4, TL1 versorgt; über die Teilleitungen TL2, TL3 erfolgt die Verbindung der ersten Speichereinheit MEM1 mit der zweiten Abtasteinheit AE2 bzw. der zweiten Speichereinheit MEM2 zur Datenübertragung. Die Adressleitungen A0₁, A1₁ und TEST, der Speichereinheit MEM1 liegen wiederum allesamt auf logischen LOW-Pegel. Die Adressleitung A2₁ hingegen liegt aufgrund der gewählten Beschaltung in diesem Zustand auf logischem HIGH-Pegel. Über die unterschiedlichen Pegel der Adressleitungen A2₁ (LOW) und A2₂ (HIGH) können demnach die beiden Speichereinheiten MEM1, MEM2 im oben erwähnten Verfahrensschritt S3 unterschieden werden.

Die beschriebene Schaltungsanordnung gewährleistet ferner, daß im Fall der Datenübertragung die Stromaufnahme lediglich um die Stromaufnahme einer Speichereinheit sowie um die Stromaufnahme der Schaltelemente steigt. Dies ist insofern wichtig, als die nachgeordnete Auswerteeinheit, die in der Regel die Stromversorgung der Abtasteinheiten gewährleistet, lediglich für die Versorgung einer einzigen Abtasteinheit ausgelegt ist.

Die oben erläuterte Schaltungsanordnung stellt selbstverständlich nur ein mögliches Ausführungsbeispiel dar, d.h. im Rahmen der vorliegenden Erfindung existieren noch eine Reihe weiterer Möglichkeiten bzgl. vorteilhafter Realisierungen.

## Patentansprüche

1. Verfahren zur Datenübertragung zwischen Speichereinheiten (MEM1, MEM2), die in ersten und zweiten Abtasteinheiten (AE1, AE2) einer oder mehrerer Positionsmeßeinrichtungen angeordnet sind, wobei in den Speichereinheiten (MEM1, MEM2) jeweils spezifische Daten der Positionsmeßeinrichtung abspeicherbar sind und über eine Datenübertragungsleitung (DL) eine Übertragung von Daten aus einer ersten Speichereinheit (MEM1) in eine zweite Speichereinheit (MEM2) erfolgt, so daß nach der erfolgten Datenübertragung in der zweiten Speichereinheit (MEM2) zumindest teilweise die spezifischen Daten der ersten Speichereinheit (MEM1) enthalten sind.

2. Verfahren nach Anspruch 1, wobei die Übertragung der Daten automatisch erfolgt, sobald erfolgreich überprüft wurde, ob ein Zugriff auf die erste Speichereinheit (MEM1) mit darin abgespeicherten Daten möglich ist.

3. Verfahren nach Anspruch 1, wobei über Anzeigemittel (AM1, AM2) angezeigt wird, ob die Datenübertragung korrekt verlaufen ist

4. Verfahren nach Anspruch 3, wobei die Anzeigemittel (AM1, AM2) als visuelle Anzeigemittel in Form mindestens einer LED ausgebildet sind, die in die Datenübertragungsleitung (DL) integriert sind.

5. Verfahren nach Anspruch 4, wobei eine korrekte Datenübertragung durch dauerhaftes Einschalten der LED visualisiert wird, während eine nicht-korrekte Datenübertragung durch Blinken der LED visualisiert wird.

6. Verfahren nach Anspruch 5, wobei im Fall der nicht-korrekten Datenübertragung mehrere Blinkmodi verfügbar sind, denen jeweils verschiedene Fehlerarten zugeordnet sind.

7. Verfahren nach Anspruch 3, wobei über die Anzeigemittel (AM1, AM2) auch die Art eines eventuell aufgetretenen Fehlers bei der Datenübertragung angezeigt wird.

8. Verfahren nach Anspruch 1, wobei im Fall der möglichen Datenübertragung auf Seiten der ersten Abtasteinheit (AE1) sichergestellt ist, daß lediglich die erste Speichereinheit (MEM1) und ein oder mehrere Schaltelemente (SE1₁ - SE1₅) mit Strom versorgt werden.

9. Verfahren nach Anspruch 1 mit folgenden Verfahrensschritten:
a) Verbinden der ersten und zweiten Abtasteinheit (AE1, AE2) mittels einer Datenübertragungsleitung (DL);
b) Verbinden der zweiten Abtasteinheit (AE2) mit einer Versorgungsleitung (L);
c) Überprüfen, ob von der zweiten Abtasteinheit (AE2) aus der Zugriff auf die erste Speichereinheit (MEM1) mit darin abgespeicherten Daten möglich ist;
d) zumindest teilweises Übertragen der Daten aus der ersten Speichereinheit (MEM1) in die zweite Speichereinheit (MEM2), sofern in Schritt c) festgestellt wurde, daß ein Zugriff auf die erste Speichereinheit (MEM1) möglich ist;
e) Aktivieren von Anzeigemitteln (AM1, AM2), die anzeigen, ob die Datenübertragung korrekt oder nicht-korrekt verlaufen ist.

10. Anordnung zur Datenübertragung zwischen Speichereinheiten (MEM1, MEM2), die in ersten und zweiten Abtasteinheiten (AE1, AE2) einer oder mehrerer Positionsmeßeinrichtungen angeordnet sind, wobei in den Speichereinheiten (MEM1, MEM2) jeweils spezifische Daten der Positionsmeßeinrichtung abspeicherbar sind und die Speichereinheiten (MEM1, MEM2) mittels einer Datenübertragungsleitung (DL) miteinander verbunden sind, über die eine Übertragung von Daten aus einer ersten Speichereinheit (MEM1) in eine zweite Speichereinheit (MEM2) erfolgt, so daß nach der erfolgten Datenübertragung in der zweiten Speichereinheit (MEM2) zumindest teilweise die spezifischen Daten der ersten Speichereinheit (MEM1) enthalten sind.

11. Anordnung nach Anspruch 10, die mindestens ein Anzeigemittel (AM1, AM2) umfaßt, welches anzeigt, ob die Datenübertragung korrekt verlaufen ist.

12. Anordnung nach Anspruch 11, wobei das Anzeigemittel (AM1, AM2) als visuelles Anzeigemittel in Form mindestens einer in die Datenübertragungsleitung (DL) integrierten LED ausgebildet ist.

13. Anordnung nach Anspruch 10, wobei die Abtasteinheiten (AE1, AE2) desweiteren jeweils eine Prozessoreinheit (CPU1, CPU2) umfassen.

14. Anordnung nach Anspruch 11 und 13, wobei die Prozessoreinheit (CPU1, CPU2) mit dem Anzeigemittel (AM1, AM2) verbunden ist und die Prozessoreinheit (CPU1, CPU2) derart ausgebildet ist, daß diese in Abhängigkeit vom korrekten oder nicht-korrekten Verlauf der Datenübertragung das Anzeigemittel (AM1, AM2) aktiviert.

15. Anordnung nach Anspruch 10, wobei die Abtasteinheiten (AE1, AE2) jeweils lösbare elektrische Verbindungselemente für die Datenübertragungsleitung (DL) aufweisen.

16. Anordnung nach Anspruch 10, die ferner mehrere Schaltelemente (SE1₁ - SE1₅, SE2₁ - SE2₅) in den Abtasteinheiten (AE1, AE2) umfaßt, die derart ansteuerbar sind, daß zumindest die erste und zweite Speichereinheit (MEM1, MEM2) in den beiden Abtasteinheiten (AE1, AE2) während der Datenübertragung mit Strom versorgbar ist.

## Claims

1. Method for transmitting data between memory units (MEM1, MEM2) which are arranged in first and second scanning units (AE1, AE2) of one or more position measuring devices, in each case specific data of the position measuring device being able to be stored in the memory units (MEM1, MEM2) and data being transmitted from a first memory unit (MEM1) to a second memory unit (MEM2) via a data transmission line (DL), such that, once data transmission has taken place, the specific data of the first memory unit (MEM1) are at least partially contained in the second memory unit (MEM2).

2. Method according to claim 1, wherein the transmission of the data takes place automatically as soon as it has been successfully checked whether access is possible to the first memory unit (MEM1) with data stored therein.

3. Method according to claim 1, wherein it is indicated via display means (AM1, AM2) whether the data transmission has taken place correctly.

4. Method according to claim 3, wherein the display means (AM1, AM2) are designed as visual display means in the form of at least one LED integrated into the data transmission line (DL).

5. Method according to claim 4, wherein a correct data transmission is indicated by the LED being constantly switched on, whilst an incorrect data transmission is indicated by the LED flashing.

6. Method according to claim 5, wherein a plurality of flashing modes is available in the event of incorrect data transmission, different types of error being associated with each mode.

7. Method according to claim 3, wherein the type of error which possibly occurred during data transmission is also indicated via the display means (AM1, AM2).

8. Method according to claim 1, wherein, in the event of possible data transmission, it is ensured on the part of the first scanning unit (AE1) that only the first memory unit (MEM1) and one or more circuit elements (SE1₁-SE1₅) are supplied with current.

9. Method according to claim 1, comprising the following steps:
a) connecting the first and second scanning units (AE1, AE2) by means of a data transmission line (DL);
b) connecting the second scanning unit (AE2) to a supply line (L);
c) checking whether access is possible from the second scanning unit (AE2) to the first memory unit (MEM1) with data stored therein;
d) at least partially transmitting the data from the first memory unit (MEM1) to the second memory unit (MEM2) insofar as it was established in step c) that access to the first memory unit (MEM1) is possible;
e) activating display means (AM1, AM2) which indicate whether the data transmission has taken place correctly or not.

10. Arrangement for transmitting data between memory units (MEM1, MEM2) which are arranged in first and second scanning units (AE1, AE2) of one or more position measuring devices, wherein specific data of the position measuring device are in each case able to be stored in the memory units (MEM1, MEM2), and the memory units (MEM1, MEM2) are interconnected by means of a data transmission line (DL) via which data are transmitted from a first memory unit (MEM1) to a second memory unit (MEM2), such that, once data transmission has taken place, the specific data of the first memory unit (MEM1) are at least partially contained in the second memory unit (MEM2).

11. Arrangement according to claim 10 which includes at least one display means (AM1, AM2) which indicates whether the data transmission has taken place correctly.

12. Arrangement according to claim 11, wherein the display means (AM1, AM2) is designed as a visual display means in the form of at least one LED integrated into the data transmission line (DL).

13. Arrangement according to claim 10, wherein the scanning units (AE1, AE2) also each include a processor unit (CPU1, CPU2).

14. Arrangement according to claims 11 and 13, wherein the processor unit (CPU1, CPU2) is connected to the display means (AM1, AM2) and the processor unit (CPU1, CPU2) is so designed that it activates the display means (AM1, AM2) depending on whether the data transmission has taken place correctly or incorrectly.

15. Arrangement according to claim 10, wherein the scanning units (AE1, AE2) each have detachable electrical connecting elements for the data transmission line (DL).

16. Arrangement according to claim 10 which also includes a plurality of circuit elements (SE1₁₋SE1₅, SE2₁-SE2₅) in the scanning units (AE1, AE2) which may be controlled in such a way that at least the first and second memory units (MEM1, MEM2) in the two scanning units (AE1, AE2) are able to be supplied with current during the data transmission.

## Revendications

1. Procédé de transfert de données entre des unités de mémoire (MEM1, MEM2) qui sont disposées dans des première et deuxième unités de palpage (AE1, AE2) d'un ou plusieurs dispositifs de mesure, dans lequel des données spécifiques du dispositif de mesure de position sont mémorisées dans les unités de mémoire (MEM1, MEM2) et un transfert de données d'une première unité de mémoire (MEM1) vers une deuxième unité de mémoire (MEM2) a lieu à travers une ligne de transfert de données (DL), de sorte qu'une fois le transfert de données réalisé, les données spécifiques de la première unité de mémoire (MEM1) sont contenues au moins partiellement dans la deuxième unité de mémoire (MEM2).

2. Procédé selon la revendication 1, dans lequel le transfert de données a lieu de manière automatique, après vérification qu'un accès à la première unité de mémoire (MEM1) et aux données contenues dans celle-ci est possible.

3. Procédé selon la revendication 1, dans lequel on indique à l'aide de moyens d'affichage (AM1, AM2) si le transfert de données s'est déroulé correctement.

4. Procédé selon la revendication 3, dans lequel les moyens d'affichage (AM1, AM2) sont réalisés sous la forme d'au moins une diode électroluminescente qui est intégrée dans la ligne de transfert de données (DL).

5. Procédé selon la revendication 4, dans lequel un transfert de données correct est visualisé par un éclairage continu de la diode électroluminescente, tandis qu'un transfert de données non correct est visualisé par le clignotement de la diode électroluminescente.

6. Procédé selon la revendication 5, dans lequel, dans le cas d'un transfert de données non correct on dispose de plusieurs mode de clignotement auxquels sont associés plusieurs types de défaut.

7. Procédé selon la revendication 3, dans lequel la nature d'un défaut éventuellement survenu dans le transfert de données est également affichée à l'aide des moyens d'affichage (AM1, AM2).

8. Procédé selon la revendication 1, dans lequel dans le cas où le transfert de données est possible, on agit côté première unité de palpage (AE1) de telle sorte que seuls la première unité de mémoire (MEM1) et un ou plusieurs éléments de commutation (SE1₁-SE1₅) soient alimentés en courant électrique

9. Procédé selon la revendication 1, comprenant les étapes suivantes:
connexion des première et deuxième unités de palpage (AE1, AE2) au moyen d'une ligne de transfert de données (DL),
connexion de la deuxième unité de palpage (AE2) à une ligne d'alimentation (L),
vérification qu'à partir de la deuxième unité de palpage (AE2) un accès à la première unité de mémoire (MEM1) et aux données mémorisées dans celle-ci est possible,
transfert au moins partiel des données de la première unité de mémoire (MEM1) dans la deuxième unité de mémoire (MEM2), dans la mesure où il a été établi à l'étape c) q'un accès à la première unité de mémoire (MEM1) est possible,
activation de moyens d'affichage (AM1, AM2) qui indiquent si le transfert de données s'est déroulé de manière correcte ou non.

10. Dispositif pour le transfert de données entre des unités de mémoire (MEM1, MEM2) qui sont disposées dans des première et deuxième unités de palpage (AE1, AE2) d'un ou plusieurs dispositifs de mesure de position, dans lequel des données spécifiques du dispositif de mesure de position sont mémorisées chaque fois dans les unités de mémoire (MEM1, MEM2) et les unités de mémoire (MEM1, MEM2) sont connectées l'une à l'autre au moyen d'une ligne de transfert de données (DL), par l'intermédiaire de laquelle un transfert de données d'une première unité de mémoire (MEM1) vers une deuxième unité de mémoire (MEM2) a lieu, de sorte qu'une fois le transfert de données réalisé les données spécifiques de la première unité de mémoire (MEM1) sont contenues au moins partiellement dans la deuxième unité de mémoire (MEM2).

11. Dispositif selon la revendication 10, qui comprend au moins un moyen d'affichage (AM1, AM2) qui indique si le transfert de données s'est déroulé correctement.

12. Dispositif selon la revendication 11, dans lequel le moyen d'affichage (AM1, AM2) est conformé en moyen d'affichage visuel, sous la forme d'au moins une diode électroluminescente qui est intégrée dans la ligne de transfert de données (DL).

13. Dispositif selon la revendication 10, dans lequel les unités de palpage (AE1, AE2) comprennent en outre chacune une unité processeur (CPU1, CPU2).

14. Dispositif selon les revendications 11 et 13, dans lequel l'unité processeur (CPU1, CPU2) est connectée au moyen d'affichage (AM1, AM2) et l'unité processeur (CPU1, CPU2) est conformée de manière telle que celle-ci, en fonction du déroulement correct ou non du transfert de données, active le moyen d'affichage (AM1, AM2).

15. Dispositif selon la revendication 10, dans lequel les unités de palpage (AE1, AE2) comprennent chacune des moyens de connexion électrique séparables pour la ligne de transfert de données (DL).

16. Dispositif selon la revendication 10, qui comporte en outre plusieurs éléments de commutation (SE1₁-SE1₅, SE2₁-SE2₅) dans les unités de palpage (AE1, AE2), qui peuvent être commandés de telle sorte qu'au moins la première et la deuxième unité de mémoire (MEM1, MEM2) dans les deux unités de palpage (AE1, AE2) soient alimentées en courant électrique pendant le transfert de données.
